# EUROPEAN PATENT SPECIFICATION

(11) **EP 4 167 530 B1**
(45) Date of publication and mention of the grant of the patent: **19.08.2026**
(21) Application number: 21822119.0
(22) Date of filing: 11.06.2021
(51) Int. Cl.: H04L 43/062, H04L 43/067, H04L 43/0811, H04L 43/065, H04L 43/0817, H04L 43/0829, H04L 43/0852, H04L 43/087

(54) **NETWORK MONITORING METHOD, ELECTRONIC DEVICE AND STORAGE MEDIUM**
NETZWERKÜBERWACHUNGSVERFAHREN, ELEKTRONISCHE VORRICHTUNG UND SPEICHERMEDIUM
PROCÉDÉ DE SURVEILLANCE DE RÉSEAU, DISPOSITIF ÉLECTRONIQUE ET SUPPORT DE STOCKAGE

(30) Priority: 12.06.2020 CN 202010537432
(43) Date of publication of application: 19.04.2023
(73) Proprietor: ZTE Corporation, Shenzhen, Guangdong 518057 (CN)
(72) Inventor: LI, Guangyan, Shenzhen, Guangdong 518057 (CN)
(74) Representative: Osterhoff, Utz
(86) International application number: PCT/CN2021/099765
(87) International publication number: WO 2021/249546

(56) References cited:
- CN-A- 105 763 388
- CN-A- 105 828 367
- CN-A- 108 093 023
- CN-A- 108 306 748
- CN-A- 108 521 340
- US-A1- 2014 101 301
- US-A1- 2017 085 456
- US-A1- 2019 296 968

## Description

### TECHNICAL FIELD

Embodiments of the application relate to the technical field of communications, and in particular, to a network monitoring method, an electronic device and a storage medium.

### BACKGROUND

With the rapid development of communication networks, more and more network devices are included in the communication network. In order to ensure services of a communication network to be performed normally, it is required to monitor the network performance of the communication network to determine whether the communication network is in a normal working state. When monitoring the network performance of the communication network, a network management system is usually used to poll a network transmission indicator in the communication network, such as an indicator of latency time, an indicator of jitter, and an indicator of packet loss rate, or poll a device performance indicator of a network node in the communication network, such as an indicator of a central processing unit (CPU for short), an indicator of an internal storage, an indicator of a routing table, and an indicator of an interface (including a count of incoming packets and a count of outgoing packets). In a specific process of polling the network transmission indicator or the device performance indicator, the network management system usually transmits a configuration instruction to the network node, and the network node acquires the corresponding indicator at a fixed time instant according to the configuration instruction and returns the network transmission indicator or the device performance indicator obtained to the network management system.

In US2014101301A1, a method and apparatus of a device that dynamically changes how management data is managed in response to events detected in a network system is described. In an exemplary embodiment, the device receives an event notification from an agent associated with a managed node. The device further determines if the received event notification triggers a change in how the management data is managed on that manage node. If the event notification does trigger a change, the device determines a command for that manage node that represents that change if how the management data is managed on the managed node. In addition, the device sends the command to the managed, where the agent applies the command to the managed node and the applied command implements the change in how the management data is managed on the managed node.

US2017085456A1 provides a method includes receiving, for each of a plurality of entities in a network, device information associated with the entity, and network traffic information regarding data packets associated with the entity. The method also includes determining, using a processor, a priority score for each of the plurality of entities in the network based on the device information and the traffic information. The method additionally includes determining a polling frequency for each of the plurality of entities based on each priority score, wherein the polling frequency for a first entity having a first priority score is greater than the polling frequency for a second entity having a second priority score that is lower than the first priority score. The method further includes polling each of the plurality of entities at its polling frequency.

There is a relatively long time interval for polling a performance indicator of each network device in relevant methods. Thus, the abnormality of the network performance cannot be determined in time.

### SUMMARY

An embodiment of the present application provides a network monitoring method, applied to a network management system and including: in response to receiving abnormal information reported by a network node, determining a suspicious region to be a link connected between a user networks interface, UNI and a network to network interface, NNI according to the abnormal information, the abnormal information being transmitted to the network management system from the network node in response to detecting by the network node that the a network transmission indicator is abnormal; transmitting an acquisition instruction to the network node within the suspicious region, the acquisition instruction is configured for acquiring a device performance indicator collected by the network node according to an original first collecting period; receiving the device performance indicator returned, in response to the acquisition instruction, by the network node within the suspicious region; and generating an abnormality analysis report according to the device performance indicator; determining a new first collecting period for the suspicious region, wherein a first collecting period is used for indicating an interval duration of collecting the device performance indicator, and the new first collecting period is shorter than an original first collecting period; wherein the acquisition instruction further comprises the new first collecting period; wherein the receiving the device performance indicator returned, in response to the acquisition instruction, by the network node within the suspicious region comprises: receiving the device performance indicator collected, according to the new first collecting period, by the network node within the suspicious region in a first preset duration; wherein the generating an abnormality analysis report according to the device performance indicator comprises: generating the abnormality analysis report according to the device performance indicator in response to determining that the network transmission indicator meets a preset alarming condition; and collecting the device performance indicator according to the original first collecting period by the network node in response to that the network transmission indicator does not meet the preset alarming condition.

An embodiment of the present application further provides a network monitoring method, applied to a network node according to claim 6.

An embodiment of the application further provides an electronic device, including: at least one processor; and a memory communicatively connected to the at least one processor. The memory is configured to store an instruction executable by the at least one processor, and the instruction is executed by the at least one processor to enable the at least one processor to implement the above network monitoring method.

An embodiment of the application further provides a computer readable storage medium with a computer program stored thereon. The computer program, when executed by a processor, causes to implement the above network monitoring method.

### BRIEF DESCRIPTION OF THE DRAWINGS

One or more embodiments are exemplarily described with reference to corresponding accompanying drawings, and the exemplary description does not constitute any limitation on the embodiments. Elements with the same reference numeral in the accompanying drawings denote similar elements, and unless otherwise stated, the accompanying drawings do not constitute any limitation on the proportion.
FIG. 1 is a schematic diagram illustrating an application scenario of a network monitoring method provided in an embodiment;
FIG. 2 is a schematic flowchart of a network monitoring method provided in an embodiment;
FIG. 3 is schematic flowchart I of a network monitoring method provided in another embodiment;
FIG. 4 is schematic flowchart II of a network monitoring method provided in another embodiment;
FIG. 5 is schematic flowchart III of a network monitoring method provided in another embodiment; and
FIG. 6 is a schematic structural diagram of an electronic device provided in an embodiment.

### DETAILED DESCRIPTION

Embodiments of the present application provide a network monitoring method, an electronic device, and a storage medium, so that an abnormality of a network device can be determined in time.

In order to make the objectives, technical solutions, and advantages of the embodiments of the present application clearer, respective embodiments of the application will be elaborated in conjunction with the accompanying drawings. However, those of ordinary skill in the art may understand that, in respective embodiments of the application, many technical details are put forward for better understanding of the application by the reader. However, the technical solutions of the present application may be implemented even without these technical details and various changes and modifications based on the following respective embodiments. The following division of respective embodiments is for the convenience of description and should not constitute any limitation on specific implementation manners of the application, and respective embodiments are not contradictory with each other.

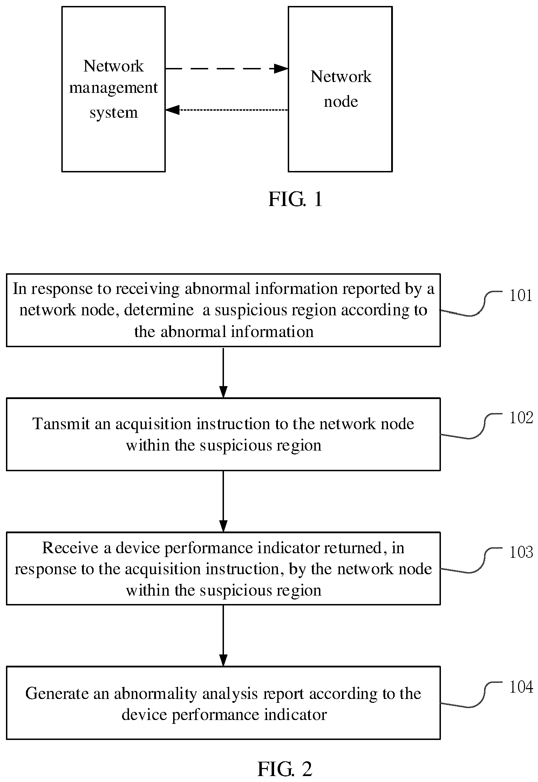

FIG. 1 is a schematic diagram illustrating an application scenario of a network monitoring method provided in an embodiment of the present application. As shown in FIG. 1, the scenario includes a network management system and a network node which are communicatively connected. In response to an instruction issued by the network management system, the network node may transmit a device performance indicator and/or a network transmission indicator collected to the network management system.

In the case that the network transmission indicator or the device performance indicator of the network node in a communication network is acquired, by performing polling, by means of the network management system, the indicator/indicators obtained is acquired at a fixed time instant. If a time instant when a network performance abnormality occurs in the communication network is not a time instant of acquiring the indicator, an abnormal indicator cannot be acquired in time, so that the abnormality of the network performance cannot be determined in time.

FIG. 2 is a schematic flowchart of a network monitoring method provided in an embodiment of the application. The present embodiment relates to a specific process of acquiring abnormal network performance in time. Implementation details of the network monitoring method in the present embodiment are described specifically below, and the following contents are implementation details provided for better understanding only and are not necessary for implementing the solution. As shown in FIG. 2, the method includes steps described below.

At step 101, in response to receiving abnormal information reported by a network node, a suspicious region is determined according to the abnormal information.

In response to detecting that a network transmission indicator is abnormal, the network node transmits the abnormal information to a network management system.

For example, the network node may include a user networks interface (UNI for short) or a network to network interface (NNI for short). The network management system (NMS for short) may be configured to monitor a working state of each of network nodes, so as to determine a current communication state of the communication network.

In an embodiment, when determining the current communication state of the communication network, the NMS usually acquires a network transmission indicator of the communication network. For example, the NMS configures the UNI as a test transmitting end and configures the NNI as a test reflecting end. The UNI acquires a network transmission indicator between the UNI and the NNI through a two-way active measurement protocol (TWAMP for short), and reports the network transmission indicator acquired to the NMS.

In an embodiment, before acquiring the network transmission indicator between the UNI and the NNI through the TWAMP, a slice network is usually created between the UNI and the NNI, including: planning the network resource, such as a device, an interface, a link, and a tunnel between the UNI and the NNI, determining a device required for the slice network from a physical topology, and performing resource synchronization; further examining the resource subjected to the synchronization to determine whether the network resource planed is sufficient; then requesting for the resource planed, and locking the requested network resource to prevent other services from using the requested network resource; and then issuing a service configuration, a TWAMP configuration, and configuration of a telemetry performance indicator subscription to the requested network resource.

In an embodiment, the service configuration includes: interface creation, configuration of an internet protocol (IP for short) address for the interface, configuration of an interior gateway protocol (IGP), configuration of a level 2 virtual private network (L2VPN for short), and configuration of a level 3 virtual private network (L3VPN for short).

In an embodiment, the TWAMP configuration includes: configuration of a reflecting end of an NNI-side device, and configuration of a transmitting end of a UNI-side device.

In an embodiment, the configuration of the telemetry performance indicator subscription includes: configuration of a sampling path and a sampling period of the telemetry for a specific interface, a CPU, an internal storage, and routing table information.

In an embodiment, when the network transmission indicator is acquired by the NMS through the TWAMP, collection is performed according to a NETCONF period. The NETCONF period is relatively short, and is usually 10 seconds or 20 seconds. Therefore, the network node may acquire the network transmission performance in a relatively short time period, and may report abnormal information to the network management system in time when the network transmission performance is abnormal.

In an embodiment, the network transmission indicator may include at least one of an indicator of latency time, an indicator of packet loss rate and an indicator of jitter.

In an embodiment, in response to receiving the abnormal information reported, when the network node detects that a network transmission indicator is abnormal, to the network management system by the network node, the network management system may determine, according to the abnormal information, a suspicious region where device performance abnormality may exist. For example, the UNI acquires the network transmission indicator between the UNI and the NNI through the TWAMP, and when the network transmission indicator obtained is abnormal, the link connected between the UNI and the NNI may be determined as the suspicious region. Network nodes between the UNI and the NNI (including the UNI and the NNI) are network nodes in the suspicious region.

In an embodiment, when the network transmission indicator collected by the network node is abnormal, the network node may also actively report the abnormal information to the network management system according to a telemetry protocol. Embodiments of the present application do not make any limitation on this.

In an embodiment, the abnormal information may be only used for indicating that the network transmission indicator is abnormal. Alternatively, the abnormal information may be used to not only indicate that the network transmission indicator is abnormal, but also carry the abnormal network transmission indicator. Embodiments of the present application do not make any limitation on this.

At step 102, an acquisition instruction is transmitted to the network node within the suspicious region.

For example, after determining the suspicious region corresponding to the abnormal information, the network management system may transmit an acquisition instruction to a network node within the suspicious region, and the acquisition instruction includes an order for acquiring a device performance indicator of the network node.

In an embodiment, the network management system may transmit the acquisition instruction to all of network nodes within the suspicious region, and may also transmit the acquisition instruction to some of the network nodes within the suspicious region. Embodiments of the present application do not make any limitation on this.

In an embodiment, in the case that the network management system transmits the acquisition instruction to some of the network nodes within the suspicious region, the network management system may determine a target network node within the suspicious region according to the abnormal information, so that the acquisition instruction is transmitted to the target network node within the suspicious region. It should be noted that, when the network management system transmits the acquisition instruction to the network nodes within the suspicious region, the network nodes within the suspicious region may include the network node that has reported the abnormal network transmission indicator, and may not include the network node that has reported the abnormal network transmission indicator either. Embodiments of the present application do not make any limitation on this.

At step 103, a device performance indicator returned, in response to the acquisition instruction, by the network node within the suspicious region is received.

In an embodiment, the network management system transmits the acquisition instruction to one network node. Accordingly, when receiving the device performance indicator returned, in response to the acquisition instruction, by the network node within the suspicious region, the network management system also receives a device performance indicator returned, in response to the acquisition instruction, by the one network node. The device performance indicator may include at least one of a processing state of a processor, a memory usage, a transmission path, a count of incoming packets, a count of outgoing packets, and a network configuration of each port.

In an embodiment, the network management system may transmit the acquisition instruction to multiple network nodes. Accordingly, when receiving the device performance indicator returned, in response to the acquisition instruction, by the network nodes within the suspicious region, the network management system may receive the device performance indicator returned, in response to the acquisition instruction, by each of the multiple network nodes.

At step 104, an abnormality analysis report is generated according to the device performance indicator.

For example, after acquiring the device performance indicator returned, in response to the acquisition instruction, by the network node, the network management system may generate the abnormality analysis report automatically according to the device performance indicator. The abnormality analysis report may be used for indicating that an abnormal network node exists in the communication network. The abnormality analysis report may be a text report, an image report, and may also be a voice report. Embodiments of the present application do not make any limitation on this.

In an embodiment, after generating the abnormality analysis report, the network management system may also output the abnormality analysis report to a user. For example, the abnormality analysis report may be transmitted to the user via a short message or via email.

In an embodiment, when the network management system generates the abnormality analysis report, reference may also be made to log information of the system to generate the abnormality analysis report.

According to the above network monitoring method, in response to receiving abnormal information transmitted to the network management system from network node, where the abnormal information is transmitted in response to detecting by the network node that a network transmission indicator is abnormal, a suspicious region is determined according to the abnormal information; an acquisition instruction including an order of acquiring a device performance indicator of the network node is transmitted to the network node within the suspicious region; the device performance indicator returned, in response to the acquisition instruction, by the network node within the suspicious region is received; and an abnormality analysis report is further generated according to the device performance indicator. In this way, once the abnormal information is received, the device performance indicator of the network node within the suspicious region can be acquired immediately, and the abnormality analysis report can be generated according to the device performance indicator in time, so that the operation and maintenance staff can determine a failure of the network node in time according to the abnormality analysis report.

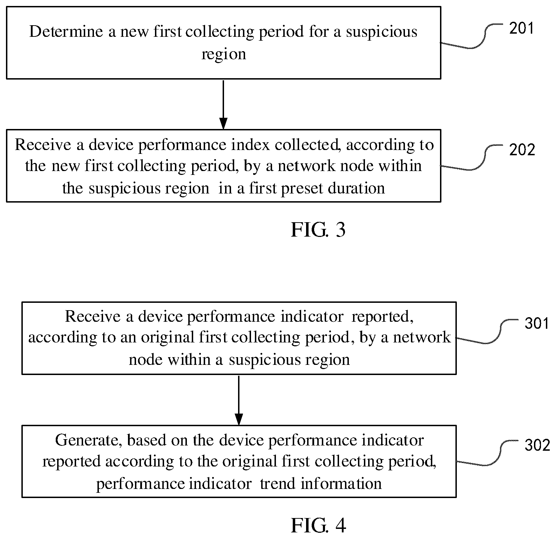

In an embodiment, when receiving the device performance indicator returned, in response to the acquisition instruction, by the network node within the suspicious region, the network management system may obtain a new first collecting period according to an original first collecting period, so that the number of device performance indicators that can be collected is increased within a limited time length. Details are described by way of the embodiment illustrated in FIG. 3. As shown in FIG. 3, the method further includes steps described below.

At step 201, a new first collecting period for the suspicious region is determined. The first collecting period is used for indicating an interval duration of collecting the device performance indicator. The new first collecting period is shorter than an original first collecting period. The original first collecting period is carried in a configuration instruction transmitted to the network node; and the acquisition instruction further includes the new first collecting period.

In an embodiment, the network node collects the corresponding device performance indicator according to the original first collecting periods. The first collecting periods corresponding to respective network nodes may be the same, and may also be different collecting periods. Embodiments of the present application do not make any limitation on this.

In an embodiment, when the network management system issues configuration information to respective network nodes, the original first collecting period may be carried in the configuration instruction transmitted to the network node. The configuration instruction may be transmitted to the network node according to a NETCONF protocol.

In an embodiment, after receiving abnormal information transmitted from the network node, the network management system may reduce the original first collecting period to obtain the new first collecting period, and allows the new first collecting period to be carried in the acquisition instruction. When the network management system transmits the acquisition instruction to respective network nodes within the suspicious region, the new first collecting period may be issued to the respective network nodes within the suspicious region at the same time.

At step 202, the device performance indicator that is collected, according to the new first collecting period, by the network node within the suspicious region in a first preset duration is received.

For example, after receiving the acquisition instruction, the network node within the suspicious region collects, according to the new first collecting period carried in the acquisition instruction, the device performance indicator in the first preset duration, and transmits the device performance indicator collected to the network management system, so that the network management system obtains the device performance indicator collected, according to the new first collecting period, in the preset duration. The first preset duration may be a duration determined according to a starting time instant and an ending time instant, and may also be a duration determined according to the new first collecting period. Embodiments of the present application do not make any limitation on this.

In an embodiment, the first preset duration may be three new first collecting periods. According to the above network monitoring method, by reducing a duration of the first collecting period for the suspicious region, the number of device performance indicators collected in the suspicious region according to the new first collecting period is increased, thereby improving the accuracy of the abnormality analysis report generated according to the device performance indicator(es).

In an embodiment, before the network management system receives the abnormality information reported by the network node, the device performance indicator may still be collected according to the original first collecting period, so as to obtain performance indicator trend information of the device performance indicator of the network node within the suspicious region. Details are described by way of the embodiment illustrated in FIG. 4. As shown in FIG. 4, the method further includes steps described below.

At step 301, the device performance indicator that is reported, according to the original first collecting period, by the network node within the suspicious region is received.

For example, before receiving the abnormality information reported by the network node, the network management system may issue the original first collecting period to the network node, and the network node collects the corresponding device performance indicator according to the original first collecting period.

In an embodiment, the network node may directly report the device performance indicator according to the original first collecting period. Alternatively, after receiving the acquisition instruction transmitted from the network management system, the network node transmits the device performance indicator that is collected, according to the original first collecting period, before receiving the acquisition instruction to the network management system. Embodiments of the present application do not make any limitation on this.

In an embodiment, when reporting the device performance indicator according to the original first collecting period, the network node may also selectively only report target device performance indicators greater than a threshold, so as to avoid an excessively large amount of data to be reported.

At step 302, performance indicator trend information is generated based on the device performance indicator/indicators reported according to the original first collecting period.

For example, in response to receiving the device performance indicator/indicators reported by the network node within the suspicious region, the network management system may determine the collecting time instant of each of the device performance indicators according to the original first collecting period, and generates the performance indicator trend information according to the collecting time instant of each of the device performance indicators. The performance indicator trend information may be graph information, text information, or animation information. Embodiments of the present application do not make any limitation on the presentation manner of the performance indicator information.

According to the above network monitoring method, the device performance indicator/indicators that are reported, according to the original first collecting period, by the network node within the suspicious region are received, and the performance indicator trend information is further generated based on the device performance indicator/indicators reported according to the original first collecting period. In this way, when determining a failure of the network node, the user may also use the performance indicator trend information to determine the failure of the network node more accurately.

In an embodiment, when generating the abnormality analysis report according to the device performance indicator/indicators, the network management system may selectively generate the abnormality analysis report.

In an embodiment, when the network transmission indicator meets a preset alarming condition, the network management system generates the abnormality analysis report according to the device performance indicator/indicators. The preset alarming condition may include that the network transmission indicator indicated by the abnormality information has not restored to normal within a second preset duration.

In an embodiment, when the network transmission indicator does not meet the preset alarming condition, for example, when the network transmission indicator indicated by the abnormality information restores to normal, the new first collecting period may be restored to the original first collecting period, so that the network node in the suspicious region collects the device performance indicator/indicators according to the original first collecting period.

According to the above network monitoring method, the abnormality analysis report is generated according to the device performance indicator/indicators only when the device performance indicator/indicators collected meets the preset alarming condition, and no abnormality analysis report is generated when the device performance indicator/indicators does not meet the preset alarming condition. In this way, the number of abnormality analysis reports generated is reduced, thereby avoiding a circumstance that the network management system stores an excessively amount of abnormality analysis reports.

In an embodiment, when the network transmission indicator is an indicator of latency time, the device performance indicator includes at least one of a processing state of a processor, a memory usage, a transmission path of the network node within the suspicious region; and when the network transmission indicator is an indicator of packet loss rate, the device performance indicator includes at least one of the following: a count of incoming packets, a count of outgoing packets, and a network configuration of each port of the network node within the suspicious region. The network configuration of each port may be a local area network configuration of each port.

According to the above network monitoring method, when the abnormality information collected is that the latency time is greater than a preset latency time threshold, the device performance indicator within the suspicious region to be acquired includes at least one of the processing state of the processor, the memory usage and the transmission path. When the abnormality information collected is that the packet loss rate is greater than a preset packet loss rate threshold, the device performance indicator in the suspicious region to be acquired includes at least one of the count of incoming packets, the count of outgoing packets, and the network configuration of each port of the network node within the suspicious region. Since device performance indicators, such as the processing state of the processor, the memory usage and the transmission path, are closely related to the latency time, and device performance indicators, such as the count of incoming packets, the count of outgoing packets, and the network configuration of each port of the network node in the suspicious region, are closely related to the packet loss rate, the abnormality analysis report generated has a relatively high correspondence to the abnormality information, so that the user may further determine a failure of the network node more accurately according to the abnormality analysis report.

In an embodiment, the abnormality information that is reported, based on notification information in accordance with the NETCONF protocol, by the network node is received.

The network node may report the abnormality information based on the notification information in accordance with the NETCONF protocol. Since it may be set that the notification information in accordance with the NETCONF protocol is reported according to a duration of a millisecond (ms for short) level, the network node may report the abnormality information at the duration of the millisecond level. In this way, after the network transmission indicator is abnormal, the network management system may receive the abnormality information reported, based on the notification information in accordance with the NETCONF protocol, by the network node in a duration of the millisecond level.

In an embodiment, before receiving the abnormality information reported by the network node, the network management system may transmit a configuration instruction to the network node. The configuration instruction includes: the network transmission indicator corresponding to the network node, a preset threshold corresponding to the network transmission indicator, the original first collecting period for the network node to collect the device performance indicator, and a second collecting period for the network node to collect the network transmission indicator. When the network transmission indicator exceeds the preset threshold, the network transmission indicator is abnormal.

In an embodiment, before receiving the abnormality information reported by the network node, for example, in a configuration stage of the network node, the network management system may transmit the configuration instruction to the network node. The configuration instruction also carries the network transmission indicator corresponding to the network node, the preset threshold corresponding to the network transmission indicator, the original first collecting period for the network node to collect the device performance indicator, and the second collecting period for the network node to collect the network transmission indicator. When the network transmission indicator exceeds the preset threshold, the network transmission indicator is abnormal. It should be noted that, one network node may correspond to one network transmission indicator, or correspond to multiple network transmission indicators. Embodiments of the present application do not make any limitation on this.

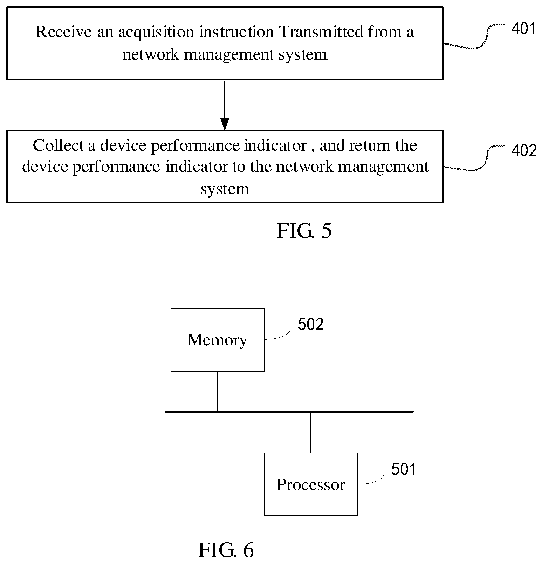

The above embodiment describes a specific implementation process of determining the network performance abnormality by the network management system in time. How to report, by the network node, the abnormality information to the network management system is described in detail below by way of the following embodiment. As shown in FIG. 5, the network monitoring method includes steps described below.

At step 401, the acquisition instruction transmitted from the network management system is received.

At step 402, the device performance indicator is collected and returned to the network management system.

In an embodiment, before the above step 401, when the network transmission indicator is abnormal, the network node may inform the network management system of the abnormality information for indicating that the network transmission indicator is abnormal.

In an embodiment, the acquisition instruction may further include a new first collecting period, and the new first collecting period is shorter than an original first collecting period. The first collecting period is used for indicating an interval duration of collecting the device performance indicator. At the above step 402, the device performance indicator is collected in the following manner: the device performance indicator is collected, according to the new first collecting period, in a preset duration.

In an embodiment, the network node may report the device performance indicator of the network node according to the original first collecting period.

In an embodiment, before receiving the acquisition instruction transmitted from the network management system, for example, before informing the network management system of the abnormality information for indicating that the network transmission indicator is abnormal, the network node may also first receive the configuration instruction issued by the network management system, and configures, according to the configuration instruction, the network transmission indicator required to be collected by the network node, a preset threshold corresponding to the network transmission indicator, the original first collecting period for collecting the device performance indicator, and a second collecting period for collecting the network transmission indicator. In an embodiment, the configuration instruction transmitted from the network management system is received; and the configuration instruction includes the network transmission indicator corresponding to the network node, the preset threshold corresponding to the network transmission indicator, the original first collecting period for the network node to collect the device performance indicator, and the second collecting period for the network node to collect the network transmission indicator. When the network transmission indicator exceeds the preset threshold, the network transmission indicator is abnormal.

It should be noted that, the above respective embodiments are examples provided for better understanding, and do not constitute any limitation to the technical solution of the disclosure.

The above division of various steps of the method is only for the purpose of clear description. In implementation, steps may be combined into one step, or a step may be divided into multiple steps. The division of the steps falls into the protection scope of the disclosure as long as the same logical relationship is included. Adding inessential modifications or introducing inessential design to the algorithm or the process without changing the core design of the algorithm or the process is also within the protection scope of the disclosure.

An embodiment of the present application relates to an electronic device, as shown in FIG. 6, which includes at least one processor 501, and a memory 502 communicatively connected to the at least one processor 501. The memory 502 is configured to store an instruction executable by the at least one processor 501, and the instruction is executed by the at least one processor 501 to enable the at least one processor 501 to implement steps illustrated in the above method embodiments.

The memory 502 and the processor 501 are connected through a bus. The bus may include any number of interconnected buses and bridges. The bus connects various circuits of one or more processors 501 and the memory 502 together. The bus may also connect various other circuits together, such as a peripheral device, a voltage stabilizer, and a power management circuit. These are known in the art, and further description will not be provided in the disclosure. A bus interface is provided between the bus and a transceiver. The transceiver may be one element and may also be multiple elements, for example, multiple receivers and transmitters. The transceiver provides a unit for communicating with various other apparatuses over a transmission medium. Data processed by the processor 501 is transmitted over a wireless medium via an antenna, and further the antenna further receives data and transmits the data to the processor 501.

The processor 501 is configured to manage the bus and regular processing, and may also provide various functions including timing, peripheral interface, voltage regulation, power management, and other control functions. The memory 502 may be used to store data used by the processor 501 when performing operations.

An embodiment of the present application relates to a computer readable storage medium storing a computer program. The computer program, when executed by a processor, is used to implement the above method embodiments.

That is, those skilled in the art may understand that all or some steps of the above method embodiments may be implemented by instructing relevant hardware through the program. The program is stored in a storage medium, and includes several instructions to cause a device (which may be a single-chip computer, a chip and the like) or a processor to carry out all or some steps of the above method in respective embodiments of the application. The foregoing storage medium includes various mediums which can store program codes, such as a USB flash disk, a mobile hard disk drive, a read-only memory (ROM), a random access memory (RAM), a magnetic disk, or an optical disk, and the like.

## Claims

1. A network monitoring method, applied to a network management system comprising:
in response to receiving abnormal information reported by a network node, determining (101) a suspicious region to be a link connected between a user networks interface, UNI and a network to network interface, NNI according to the abnormal information, wherein the abnormal information is transmitted to the network management system from the network node in response to detecting by the network node that a network transmission indicator is abnormal;
transmitting (102) an acquisition instruction to the network node within the suspicious region, wherein the acquisition instruction is configured for acquiring a device performance indicator collected by the network node according to an original first collecting period;
receiving (103) the device performance indicator returned, in response to the acquisition instruction, by the network node within the suspicious region; and
generating (104) an abnormality analysis report according to the device performance indicator;
determining (201) a new first collecting period for the suspicious region, wherein a first collecting period is used for indicating an interval duration of collecting the device performance indicator, and the new first collecting period is shorter than an original first collecting period;
wherein the acquisition instruction further comprises the new first collecting period;
wherein the receiving (103) the device performance indicator returned, in response to the acquisition instruction, by the network node within the suspicious region comprises:
receiving (202) the device performance indicator collected, according to the new first collecting period, by the network node within the suspicious region in a first preset duration;
wherein the generating (104) an abnormality analysis report according to the device performance indicator comprises:
generating the abnormality analysis report according to the device performance indicator in response to determining that the network transmission indicator meets a preset alarming condition; and
collecting the device performance indicator according to the original first collecting period by the network node in response to that the network transmission indicator does not meet the preset alarming condition.

2. The method according to claim 1, wherein the preset alarming condition comprises that the network transmission indicator indicated by the abnormal information is not restored to normal in a second preset duration.

3. The method according to claim 1 or 2, wherein when the network transmission indicator is an indicator of latency time, the device performance indicator comprises at least one of a memory usage, a transmission path, a processing state of a processor of the network node within the suspicious region; and when the network transmission indicator is an indicator of packet loss rate, the device performance indicator comprises at least one of a count of incoming packets, a count of outgoing packets, and a network configuration of each port of the network node within the suspicious region.

4. The method according to any one of claims 1 to 3, wherein the receiving abnormal information reported by a network node comprises:
receiving the abnormal information reported, based on notification information in accordance with a NETCONF protocol, by the network node.

5. The method according to any one of claims 1 to 4, wherein before receiving the abnormal information reported by the network node, the method further comprises:
transmitting a configuration instruction to the network node;
wherein the configuration instruction carries the network transmission indicator corresponding to the network node, a preset threshold corresponding to the network transmission indicator, the original first collecting period for the network node to collect the device performance indicator, and a second collecting period for the network node to collect the network transmission indicator; and wherein when the network transmission indicator exceeds the preset threshold, the network transmission indicator is abnormal.

6. A network monitoring method, applied to a network node comprising:
detecting that a network transmission indicator is abnormal and sending an abnormal information to a network management system; receiving (401) an acquisition instruction transmitted from the network
management system, wherein the acquisition instruction comprises an order for acquiring a device performance indicator of the network node; and
collecting the device performance indicator, and returning the device performance indicator to the network management system (402);
wherein the acquisition instruction further comprises a new first collecting period; the new first collecting period is shorter than an original first collecting period; the first collecting period and the original first collecting period are used for indicating an interval duration of collecting the device performance indicator; the method further comprises:
sending the device performance indicator collected, according to the new first collecting period within the suspicious region in a first preset duration;
generating an abnormality analysis report by the network management system according to the device performance indicator in response to determining that the network transmission indicator meets a preset alarming condition; and
collecting the device performance indicator according to the original first collecting period by the network node in response to that the network transmission indicator does not meet the preset alarming condition.

7. The method according to claim 6, wherein the preset alarming condition comprises that the network transmission indicator indicated by the abnormal information is not restored to normal in a second preset duration.

8. The method according to any one of claims 6 to 7, wherein when the network transmission indicator is an indicator of latency time, the device performance indicator comprises at least one of a memory usage, a transmission path, a processing state of a processor of the network node within the suspicious region; and when the network transmission indicator is an indicator of packet loss rate, the device performance indicator comprises at least one of a count of incoming packets, a count of outgoing packets, and a network configuration of each port of the network node within the suspicious region.

9. The method according to claim 8, wherein the transmission of abnormal information comprises: transmitting the abnormal information, based on notification information in accordance with a NETCONF protocol to the network management system.

10. The method according to any one of claims 6 to 9, wherein before receiving the acquisition instruction transmitted from the network management system, the method further comprises:
receiving a configuration instruction transmitted from the network management system, wherein the configuration instruction comprises a network transmission indicator corresponding to the network node, a preset threshold corresponding to the network transmission indicator, the original first collecting period for the network node to collect the device performance indicator, and a second collecting period for the network node to collect the network transmission indicator, and wherein when the network transmission indicator exceeds the preset threshold, the network transmission indicator is abnormal.

11. A network device, comprising:
at least one processor (501); and
a memory (502) communicatively connected to the at least one processor (501),
wherein the memory (502) is configured to store an instruction executable by the at least one processor (501), and the instruction is executed by the at least one processor (501) to enable the at least one processor to implement the network monitoring method according to any one of claims 1 to 5 or claims 6 to 10.

12. A computer readable storage medium with a computer program stored thereon, wherein the computer program, when executed by a processor, causes to implement the network monitoring method according to any one of claims 1 to 5 or claims 6 to 10.

## Patentansprüche

1. Verfahren zur Netzüberwachung, das auf ein Netzverwaltungssystem angewendet wird und Folgendes umfasst:
als Reaktion auf den Empfang von durch einen Netzknoten gemeldeten Anomalieinformationen, Bestimmen (101) eines Verdachtsbereichs als eine Verbindung zwischen einer User Network Interface (UNI) und einer Network-to-Network Interface (NNI) gemäß den Anomalieinformationen, wobei die Anomalieinformationen von dem Netzknoten an das Netzverwaltungssystem übertragen werden, als Reaktion auf die Erkennung durch den Netzknoten, dass ein Netzübertragungsindikator anomal ist;
Übertragen (102) einer Erfassungsanweisung an den Netzknoten innerhalb des Verdachtsbereichs, wobei die Erfassungsanweisung dazu konfiguriert ist, einen Geräteleistungsindikator zu erfassen, der von dem Netzknoten gemäß einem ursprünglichen ersten Erfassungszeitraum erfasst wird;
Empfangen (103) des als Reaktion auf die Erfassungsanweisung von dem Netzknoten innerhalb des Verdachtsbereichs zurückgegebenen Geräteleistungsindikators; und
Erzeugen (104) eines Anomalieanalyseberichts gemäß dem Geräteleistungsindikator;
Bestimmen (201) eines neuen ersten Erfassungszeitraums für den Verdachtsbereich, wobei ein erster Erfassungszeitraum verwendet wird, um eine Intervallzeitdauer für das Erfassen des Geräteleistungsindikators anzugeben, und der neue erste Erfassungszeitraum kürzer als ein ursprünglicher erster Erfassungszeitraum ist;
wobei die Erfassungsanweisung ferner den neuen ersten Erfassungszeitraum umfasst;
wobei das Empfangen (103) des als Reaktion auf die Erfassungsanweisung von dem Netzknoten innerhalb des Verdachtsbereichs zurückgegebenen Geräteleistungsindikators umfasst:
Empfangen (202) des von dem Netzknoten innerhalb des Verdachtsbereichs während einer ersten voreingestellten Zeitdauer gemäß dem neuen ersten Erfassungszeitraum erfassten Geräteleistungsindikators;
wobei das Erzeugen (104) eines Anomalieanalyseberichts gemäß dem Geräteleistungsindikator umfasst:
Erzeugen des Anomalieanalyseberichts gemäß dem Geräteleistungsindikator als Reaktion auf die Bestimmung, dass der Netzübertragungsindikator eine voreingestellte Alarmbedingung erfüllt; und
Erfassen des Geräteleistungsindikators gemäß dem ursprünglichen ersten Erfassungszeitraum durch den Netzknoten als Reaktion darauf, dass der Netzübertragungsindikator die voreingestellte Alarmbedingung nicht erfüllt.

2. Verfahren nach Anspruch 1, wobei die voreingestellte Alarmbedingung umfasst, dass der durch die Anomalieinformationen angezeigte Netzübertragungsindikator innerhalb einer zweiten voreingestellten Zeitdauer nicht wieder in einen normalen Zustand zurückkehrt.

3. Verfahren nach Anspruch 1 oder 2, wobei, wenn der Netzübertragungsindikator ein Indikator für Latenzzeit ist, der Geräteleistungsindikator mindestens eines von einer Speichernutzung, einem Übertragungspfad und einem Verarbeitungszustand eines Prozessors des Netzknotens innerhalb des Verdachtsbereichs umfasst; und wenn der Netzübertragungsindikator ein Indikator für Paketverlustrate ist, der Geräteleistungsindikator mindestens eines von einer Anzahl eingehender Pakete, einer Anzahl ausgehender Pakete und einer Netzwerkkonfiguration jedes Ports des Netzknotens innerhalb des Verdachtsbereichs umfasst.

4. Verfahren nach einem der Ansprüche 1 bis 3, wobei das Empfangen der von einem Netzknoten gemeldeten Anomalieinformationen umfasst:
Empfangen der von dem Netzknoten auf der Grundlage von Benachrichtigungsinformationen gemäß einem NETCONF-Protokoll gemeldeten Anomalieinformationen.

5. Verfahren nach einem der Ansprüche 1 bis 4, wobei das Verfahren vor dem Empfangen der von dem Netzknoten gemeldeten Anomalieinformationen ferner umfasst:
Übertragen einer Konfigurationsanweisung an den Netzknoten;
wobei die Konfigurationsanweisung den Netzübertragungsindikator trägt, der dem Netzknoten entspricht, einen voreingestellten Schwellenwert, der dem Netzübertragungsindikator entspricht, den ursprünglichen ersten Erfassungszeitraum für den Netzknoten zum Erfassen des Geräteleistungsindikators und einen zweiten Erfassungszeitraum für den Netzknoten zum Erfassen des Netzübertragungsindikators; und wobei der Netzübertragungsindikator abnormal ist, wenn er den voreingestellten Schwellenwert überschreitet.

6. Verfahren zur Netzüberwachung, das auf einen Netzknoten angewendet wird und Folgendes umfasst:
Erkennen, dass ein Netzübertragungsindikator abnormal ist, und Senden einer Anomalieinformation an ein Netzverwaltungssystem;
Empfangen (401) einer von dem Netzverwaltungssystem übertragenen Erfassungsanweisung, wobei die Erfassungsanweisung einen Befehl zum Erfassen eines Geräteleistungsindikators des Netzknotens umfasst; und
Erfassen des Geräteleistungsindikators sowie das Zurücksenden (402) des Geräteleistungsindikators an das Netzverwaltungssystem;
wobei die Erfassungsanweisung weiterhin einen neuen ersten Erfassungszeitraum umfasst; wobei der neue erste Erfassungszeitraum kürzer als ein ursprünglicher erster Erfassungszeitraum ist; wobei der erste Erfassungszeitraum und der ursprüngliche erste Erfassungszeitraum zur Angabe einer Intervallzeitdauer des Erfassens des Geräteleistungsindikators dienen;
wobei das Verfahren umfasst weiterhin:
Senden des gemäß dem neuen ersten Erfassungszeitraum innerhalb des Verdachtsbereichs während einer ersten voreingestellten Zeitdauer erfassten Geräteleistungsindikators;
Erzeugen eines Anomalieanalyseberichts durch das Netzverwaltungssystem gemäß dem Geräteleistungsindikator als Reaktion auf die Bestimmung, dass der Netzübertragungsindikator eine voreingestellte Alarmbedingung erfüllt; und
Erfassen des Geräteleistungsindikators gemäß dem ursprünglichen ersten Erfassungszeitraum durch den Netzknoten als Reaktion darauf, dass der Netzübertragungsindikator die voreingestellte Alarmbedingung nicht erfüllt.

7. Verfahren nach Anspruch 6, wobei die voreingestellte Alarmbedingung umfasst, dass der durch die Anomalieinformationen angezeigte Netzübertragungsindikator innerhalb einer zweiten voreingestellten Zeitdauer nicht wieder in einen normalen Zustand zurückkehrt.

8. Verfahren nach einem der Ansprüche 6 bis 7, wobei, wenn der Netzübertragungsindikator ein Indikator für Latenzzeit ist, der Geräteleistungsindikator mindestens eines von einer Speichernutzung, einem Übertragungspfad und einem Verarbeitungszustand eines Prozessors des Netzknotens innerhalb des Verdachtsbereichs umfasst; und wenn der Netzübertragungsindikator ein Indikator für Paketverlustrate ist, der Geräteleistungsindikator mindestens eines von einer Anzahl eingehender Pakete, einer Anzahl ausgehender Pakete und einer Netzwerkkonfiguration jedes Ports des Netzknotens innerhalb des Verdachtsbereichs umfasst.

9. Verfahren nach Anspruch 8, wobei das Übertragen von Anomalieinformationen umfasst:
Übertragen der Anomalieinformationen auf der Grundlage von Benachrichtigungsinformationen gemäß einem NETCONF-Protokoll an das Netzverwaltungssystem.

10. Verfahren nach einem der Ansprüche 6 bis 9, wobei das Verfahren vor dem Empfangen der von dem Netzverwaltungssystem übertragenen Erfassungsanweisung ferner umfasst:
Empfangen einer Konfigurationsanweisung, die vom Netzverwaltungssystem übertragen wird, wobei die Konfigurationsanweisung einen Netzübertragungsindikator umfasst, der dem Netzknoten entspricht, einen voreingestellten Schwellenwert, der dem Netzübertragungsindikator entspricht, den ursprünglichen ersten Erfassungszeitraum für den Netzknoten zum Erfassen des Geräteleistungsindikators und einen zweiten Erfassungszeitraum für den Netzknoten zum Erfassen des Netzübertragungsindikators, und wobei der Netzübertragungsindikator abnormal ist, wenn er den voreingestellten Schwellenwert überschreitet.

11. Netzvorrichtung, umfassend:
mindestens einen Prozessor (501); und
einen Speicher (502), der kommunikativ mit dem mindestens einen Prozessor (501) verbunden ist,
wobei der Speicher (502) dazu eingerichtet ist, eine durch den mindestens einen Prozessor (501) ausführbare Anweisung zu speichern, und die Anweisung durch den mindestens einen Prozessor (501) ausgeführt wird, um den mindestens einen Prozessor (501) zu veranlassen, das Verfahren zur Netzüberwachung nach einem der Ansprüche 1 bis 5 oder 6 bis 10 auszuführen.

12. Computerlesbares Speichermedium mit einem darauf gespeicherten Computerprogramm, wobei das Computerprogramm bei Ausführung durch einen Prozessor veranlasst, das Verfahren zur Netzüberwachung gemäß einem der Ansprüche 1 bis 5 oder der Ansprüche 6 bis 10 auszuführen.

## Revendications

1. Procédé de surveillance de réseaux, appliqué à un système de gestion de réseaux comprenant :
en réponse à une réception d'informations anormales signalées par un nœud réseau, déterminer (101) une région suspecte comme lien connecté entre une interface réseau utilisateur, UNI et une interface réseau à réseau, NNI, en fonction des informations anormales, les informations anormales étant transmises au système de gestion de réseaux à partir du nœud réseau en réponse à une détection effectuée par le nœud réseau qu'un indicateur de transmission réseau est anormal ;
transmettre (102) une instruction d'acquisition au nœud réseau dans la région suspecte, l'instruction d'acquisition étant configurée pour acquérir un indicateur de performance de dispositif collecté par le nœud réseau en fonction d'une première période de collecte initiale ;
recevoir (103) l'indicateur de performance de dispositif retourné, en réponse à l'instruction d'acquisition, par le nœud réseau dans la région suspecte ; et
générer (104) un rapport d'analyse d'anomalies en fonction de l'indicateur de performance de dispositif ;
déterminer (201) une nouvelle première période de collecte pour la région suspecte, une première période de collecte étant utilisée pour indiquer une durée d'intervalle de la collecte de l'indicateur de performance de dispositif, et la nouvelle première période de collecte étant inférieure à une première période de collecte initiale ;
dans lequel l'instruction d'acquisition comprend en outre la nouvelle première période de collecte ;
dans lequel la réception (103) de l'indicateur de performance de dispositif retourné, en réponse à l'instruction d'acquisition, par le nœud réseau dans la région suspecte comprend :
recevoir (202) l'indicateur de performance de dispositif collecté, en fonction de la nouvelle première période de collecte, par le nœud réseau dans la région suspecte pendant une première durée prédéfinie ;
dans lequel la génération (104) d'un rapport d'analyse d'anomalies en fonction de l'indicateur de performance de dispositif comprend :
générer le rapport d'analyse d'anomalies en fonction de l'indicateur de performance de dispositif en réponse à la détermination que l'indicateur de transmission réseau répond à une condition d'alarme prédéfinie ; et
collecter l'indicateur de performance de dispositif en fonction de la première période de collecte initiale par le nœud réseau en réponse à ce que l'indicateur de transmission réseau ne répond pas à la condition d'alarme prédéfinie.

2. Procédé selon la revendication 1, dans lequel la condition d'alarme prédéfinie comprend que l'indicateur de transmission réseau indiqué par les informations anormales ne revient pas à la normale dans une seconde durée prédéfinie.

3. Procédé selon la revendication 1 ou 2, dans lequel, lorsque l'indicateur de transmission réseau est un indicateur de temps de latence, l'indicateur de performance de dispositif comprend au moins l'un parmi une utilisation de mémoire, un chemin de transmission, un état de traitement d'un processeur du nœud réseau dans la région suspecte ; et lorsque l'indicateur de transmission réseau est un indicateur de taux de perte de paquets, l'indicateur de performance de dispositif comprend au moins l'un parmi un nombre de paquets entrants, un nombre de paquets sortants et une configuration réseau de chaque port du nœud réseau dans la région suspecte.

4. Procédé selon l'une quelconque des revendications 1 à 3, dans lequel la réception d'informations anormales signalées par un nœud réseau comprend :
recevoir les informations anormales signalées, sur la base des informations de notification conformément à un protocole NETCONF, par le nœud réseau.

5. Procédé selon l'une quelconque des revendications 1 à 4, dans lequel, avant la réception d'informations anormales signalées par un nœud réseau, le procédé comprend en outre :
transmettre une instruction de configuration au nœud réseau ;
dans lequel l'instruction de configuration inclut l'indicateur de transmission réseau correspondant au nœud réseau, un seuil prédéfini correspondant à l'indicateur de transmission réseau, la première période de collecte initiale pour que le nœud réseau collecte l'indicateur de performance de dispositif, et une seconde période de collecte pour que le nœud réseau collecte l'indicateur de transmission réseau ; et dans lequel, lorsque l'indicateur de transmission réseau dépasse le seuil prédéfini, l'indicateur de transmission réseau est considéré comme anormal.

6. Procédé de surveillance de réseaux, appliqué à un nœud réseau, comprenant :
détecter qu'un indicateur de transmission réseau est anormal et envoyer une information anormale à un système de gestion de réseaux ;
recevoir (401) une instruction d'acquisition transmise par le système de gestion de réseaux, l'instruction d'acquisition comprenant un ordre pour acquérir un indicateur de performance de dispositif du nœud réseau ; et
collecter l'indicateur de performance de dispositif et renvoyer l'indicateur de performance de dispositif au système de gestion de réseaux (402) ;
dans lequel l'instruction d'acquisition comprend en outre une nouvelle première période de collecte ; la nouvelle première période de collecte étant inférieure à une première période de collecte initiale ; la première période de collecte et la première période de collecte initiale étant utilisées pour indiquer une durée d'intervalle de la collecte de l'indicateur de performance de dispositif ;
le procédé comprend en outre :
envoyer l'indicateur de performance de dispositif collecté, en fonction de la nouvelle première période de collecte dans la région suspecte pendant une première durée prédéfinie ;
générer un rapport d'analyse d'anomalies par le système de gestion de réseaux en fonction de l'indicateur de performance de dispositif en réponse à la détermination que l'indicateur de transmission réseau répond à une condition d'alarme prédéfinie ; et
collecter l'indicateur de performance de dispositif en fonction de la première période de collecte initiale par le nœud réseau en réponse à ce que l'indicateur de transmission réseau ne répond pas à la condition d'alarme prédéfinie.

7. Procédé selon la revendication 6, dans lequel la condition d'alarme prédéfinie comprend que l'indicateur de transmission réseau indiqué par les informations anormales ne revient pas à la normale dans une seconde durée prédéfinie.

8. Procédé selon l'une quelconque des revendications 6 à 7, dans lequel, lorsque l'indicateur de transmission réseau est un indicateur de temps de latence, l'indicateur de performance de dispositif comprend au moins l'un parmi une utilisation de mémoire, un chemin de transmission, un état de traitement d'un processeur du nœud réseau dans la région suspecte ; et lorsque l'indicateur de transmission réseau est un indicateur de taux de perte de paquets, l'indicateur de performance de dispositif comprend au moins l'un parmi un nombre de paquets entrants, un nombre de paquets sortants et une configuration réseau de chaque port du nœud réseau dans la région suspecte.

9. Procédé selon la revendication 8, dans lequel la transmission des informations anormales comprend : transmettre les informations anormales, sur la base des informations de notification conformément à un protocole NETCONF, au système de gestion de réseaux.

10. Procédé selon l'une quelconque des revendications 6 à 9, dans lequel, avant la réception de l'instruction d'acquisition transmise par le système de gestion de réseaux, le procédé comprend en outre :
recevoir une instruction de configuration transmise par le système de gestion de réseaux, l'instruction de configuration incluant un indicateur de transmission réseau correspondant au nœud réseau, un seuil prédéfini correspondant à l'indicateur de transmission réseau, la première période de collecte initiale pour que le nœud réseau collecte l'indicateur de performance de dispositif, et une seconde période de collecte pour que le nœud réseau collecte l'indicateur de transmission réseau ; et lorsque l'indicateur de transmission réseau dépasse le seuil prédéfini, l'indicateur de transmission réseau étant considéré comme anormal.

11. Dispositif réseau, comprenant :
au moins un processeur (501) ; et
une mémoire (502) connectée par communication au ou aux processeurs (501) ;
dans lequel la mémoire (502) est configurée pour stocker une instruction exécutable par le ou les processeurs (501), et l'instruction est exécutée par le ou les processeurs (501), de sorte que le ou les processeurs mettent en œuvre le procédé de surveillance de réseaux selon l'une quelconque des revendications 1 à 5 ou des revendications 6 à 10.

12. Support de stockage lisible par ordinateur avec un programme informatique stocké sur celui-ci, dans lequel le programme informatique, lorsqu'il est exécuté par un processeur, amène la mise en œuvre du procédé de surveillance de réseaux selon l'une quelconque des revendications 1 à 5 ou des revendications 6 à 10.
